# EUROPÄISCHE PATENTANMELDUNG

(11) **EP 1 992 469 A1**
(43) Veröffentlichungstag der Anmeldung: **19.11.2008**
(21) Anmeldenummer: 08008549.1
(22) Anmeldetag: 07.05.2008
(51) Int. Cl.: B29C 43/18, B29C 43/20, B29C 43/50

(54) **Verfahren zur Herstellung einer Membran in einem Rahmen**

(30) Priorität: 18.05.2007 DE 102007023286
(71) Anmelder: Forschungszentrum Karlsruhe GmbH, 76133 Karlsruhe (DE)
(72) Erfinder: Truckenmüller, Roman, Dr., 74223 Flein (DE); Giselbrecht, Stefan, Dr., 76187 Karlsruhe (DE)
(74) Vertreter: Gärtner, Stephan

(57) **Zusammenfassung**

Die Erfindung betrifft ein Verfahren zur Herstellung einer Membran, insbesondere einer mit einer Dicke von 0,1 bis 20 µm sehr dünnen, teilweise dreidimensional, vorzugsweise mikround/oder nanostrukturierten Membran in einem Rahmen.

Hierzu wird eine umzuformende Folie (1) bereitgestellt, die durch Pressen der Folie (1) mit einem flüssigen Kunststoff (2) unter Druck über eine Positiv- oder in eine Negativform (3) mindestens teilweise umgeformt wird, wodurch die Folie (1) zumindest teilweise die Gestalt der Form (3) annimmt. Nach dem Verfestigen oder dem Verfestigenlassen der Schmelze bildet sich ein fester Kunststoff (2') aus, woraufhin das Entformen des Verbunds aus umgeformter Folie (1) und erstarrter Schmelze erfolgt. Schließlich wird die umgeformte Folie (1') mitsamt einem mit ihr verbundenen Rahmen (4) vom Verbund mit dem festen Kunststoff (2') so abgelöst, dass die umgeformte Folie (1') im Rahmen (4) als Membran freigespannt aufgehängt ist. Als Rahmen (4) wird entweder ein mit der umzuformenden Folie (1) verbundener Körper bereitgestellt oder der Rahmen wird vor dem Ablösen der umgeformten Folie (1') mit dieser verbunden.

## Beschreibung

Die Erfindung betrifft ein Verfahren zur Herstellung einer Membran, insbesondere einer mit einer Dicke von 0,1 µm bis 20 µm sehr dünnen, teilweise dreidimensional, vorzugsweise mikro- und/oder nanostrukturierten Membran in einem Rahmen.

Vor allem, aber nicht nur bei der Anwendung von Mikrotechniken und Nanotechnologien in den Lebenswissenschaften spielen mikro- und nanostrukturierte Membranen eine bedeutende Rolle. In den meisten Anwendungen handelt es sich hierbei um sehr dünne Membranen mit Dicken von wenigen Mikrometern oder darunter, die aus organischen Materialien wie Polymeren oder aus nichtorganischen Materialien wie Silizium bestehen.

So werden in der in der DE 42 38 571 C1, in B. Büstgens, W. Bacher, W. Bier, R. Ehnes, D. Maas, R. Ruprecht, W. K. Schomburg and L. Keydel, Micromembrane pump manufactured by molding. Proc., 4th International Conference on New Actuators (Actuator '94), Bremen, Germany, June 15-17, 1994, pp. 86-90 und in W. K. Schomburg, R. Ahrens, W. Bacher, J. Martin and V. Saile, AMANDA - surface micromachining, molding, and diaphragm transfer, Sens. Actuators A 76 (1999) 343-348 Mikrosensoren und -aktoren und speziell eine Mikropumpe aus Kunststoff auf Basis von dünnen, zwischen zwei Gehäusehälften montierten mikrostrukturierten (Polymer-)Membranen sowie ein Verfahren zu deren Herstellung beschrieben. Hierbei werden die dünnen Membranstrukturen auf glatten, ebenen Substraten, bevorzugt (Silizium-)Wafer, im Fall metallischer Membranen durch Sputtern oder Aufdampfen und im Fall polymerer Membranen durch Aufschleudern hergestellt. Die Membranen sind nur über den umlaufenden Rand des Substrats direkt und fest mit diesem verbunden. Über die gesamte Substratmitte sind sie jedoch mittels einer gegen Silizium niedrigadhäsiven Schicht aus Gold oder einer niedrigkohäsiven Schicht aus amorphem Kohlenstoff bzw.

Ruß nur indirekt und lediglich lose mit jener verbunden. Nach der Prozessierung der über die Gold- oder Rußschicht hinweg freigespannten Membran kann diese mittels einer aufgeklebten ersten Gehäusehälfte, um deren äußere Umrisse herum die Membran über der niedrigadhäsiven oder -kohäsiven Schicht durchtrennt und damit freigeschnitten wird, vom Substrat abgehoben werden. Nachteilig hieran ist, dass die Membranen zwar mit typischen Dicken von wenigen Mikrometern sehr dünn ausgeführt werden können, jedoch nur mit hohem Prozessaufwand und geringen Formfreiheitsgraden zweieinhalb- oder dreidimensional, wie es z.B. für bistabile Mikroaktoren mit dom- bzw. kalottenförmigen Membranstrukturen erforderlich wäre. So müssen mehrere lateral unterschiedlich strukturierte Membranen übereinandergeschichtet prozessiert werden. Oder es müssen, wie in der DE 195 22 806 C2 für ein Mikromembranventil beschrieben, unter Ausnutzung unterschiedlicher linearer Wärmeausdehnungskoeffizienten verschiedener Materialien, mechanische Spannungen in die Membranen eingeprägt werden, in deren Folge sich diese dreidimensional verwölben.

Weiter wird in der DE 10 2004 035 267 und in S. Giselbrecht, T. Gietzelt, E Gottwald, C. Trautmann, R Truckenmüller, K F Weibezahn and A Welle, 3D tissue culture substrates produced by microthermoforming of pre-processed polymer films, Biomed. Microdevices 8 (2006) 191-199 ein Substrat zur dreidimensionalen Zellkultivierung in Form von dreidimensional zu einem Mikrocontainer-Array geformten, mikrostrukturierten Polymermembranen sowie entsprechende Herstellungsverfahren beschrieben. Dabei werden die Membranstrukturen in einem mikroskaligen Thermoformprozess hergestellt. Unter ,Thermoformen' versteht man das Formen von erwärmten und deswegen erweichten, am Rand fest eingespannten thermoplastischen Halbzeugen in Form von Folien und Platten durch dreidimensionales Verstrecken. Hierbei handelt sich um ein Streckziehen (auch Streckformen) des erwärmten, fest eingespannten Zuschnitts unter Ausdünnung der Ausgangswanddicke. Der Mikrothermoformprozess für die Herstellung der Mikrocontainer ist eine Adaption des makroskopischen Trapped Sheet (Thermo-)Forming in Form eines (High) Pressure Forming-Prozesses. Dabei werden die Membranen in der Gestalt von dünnen thermoplastischen Folien im erwärmten Zustand durch Gasdruck in mit entsprechend mikrostrukturierten Kavitäten versehene Formwerkzeuge eingeformt. Nachteilig hieran ist, dass die Membranen zwar dreidimensional ausgeführt werden können, jedoch nur mit großem Handhabungsaufwand auch sehr dünn, nicht nur bei der Entformung, sondern auch bei der Weiterprozessierung der Membranen. Sehr dünne Membranen wären z.B. für in den menschlichen oder tierischen Körper implantierbare und dort abbaubare Zellkultursubstrate aus biodegradierbaren Polymeren wünschenswert. Nachteilig hieran ist weiterhin, dass es im Mikroskopischen - im Gegensatz zum Makroskopischen - bei Folien, die schon dick gegenüber den Abmaßen der Werkzeugkavitäten sind, obwohl sie gleichzeitig gerade noch handhabbar dünn sind, sehr hoher, betriebssicher zur Verfügung gestellter Gasdrücke zum Formen bedarf.

Darüber hinaus gibt es weitere Beispiele von mikroskaligen Thermoformprozessen. Eigentlich handelt es sich hierbei teilweise mehr um Tiefzieh- als um Thermoformprozesse. In H. Dreuth and C. Heiden, Thermoplastic structuring of thin polymer films, Sens. Actuators A-Physical 78 (1999) 198-204 wird beschrieben, wie wellblechartige polymere Mikrostrukturen zur Verwendung in z. B. elektrostatischen Aktoren hergestellt wurden. Dies wurde zwischen beheizten Werkzeugen und Gegenwerkzeugen bewerkstelligt, und zwar in diskontinuierlichen Prozessen zwischen Stempeln oder in kontinuierlichen Prozessen zwischen Walzen. Teilweise war das Gegenwerkzeug ein weiches Gegenwerkzeug in der Gestalt einer dickeren, unstrukturierten Folie aus einem leicht und reversibel verformbaren, elastomeren Material, das in der Lage ist, die Form des harten, metallischen Werkzeugs anzunehmen. Folien aus Polyethylenterephthalat (PET) mit einer Dicke bis herunter zu 1,5 µm wurden eingesetzt, um Wellenstrukturen mit einer Strukturweite bis hinunter zu 1 µm herzustellen. In jedem Fall lag nur eine geringe Ausformschärfe vor.

In P. Nagarajan and D. Yao, Rubber-assisted hot embossing for structuring thin film polymeric films. Proc., ASME International Mechanical Engineering Congress and Exposition (IME-CE2006), Chicago, IL, USA, November 5-10, 2006 wird beschrieben, wie eine Polymerfolie zwischen eine Metallform und eine Gummigegenplatte eingesetzt, erhitzt und gepresst wurde, um die gleichen wellblechartigen Strukturen in einem sogenannten Rubber-Assisted Hot Embossing-Prozess herzustellen. In diesem Fall war die verwendete Folie eine 25 µm dicke Folie aus Polystyrol (PS), die hergestellten Wellenstrukturen hatten eine Strukturweite bzw. einen Kurvendurchmesser von ungefähr 100 µm. Das Arbeiten mit einem harten Werkzeug und einem dazu passenden ebenfalls harten Gegenwerkzeug aus Metall ist ein schwieriger Ansatz bei der Verwendung von mikrostrukturierten Werkzeugen. Dies gilt besonders für große mikrostrukturierte Flächen. Nachteilig hieran ist, dass wenn die Werkzeuge in einem diskontinuierlichen Prozess mit Stempeln thermisch zykliert werden, sie über den gesamten Bereich von der Form- bis zur Entformtemperatur ineinander passen und gegeneinander ausgerichtet sein müssen. Das Arbeiten mit einer harten Form und einer weichen Gegenplatte in der Gestalt einer Gummifolie ist ein vergleichsweise einfacher Ansatz. Nachteilig hieran wiederum ist aber, dass die Ausformschärfe für scharfkantige Formdetails in der lateralen und orthogonalen Richtung wegen der beschränkten Verformbarkeit des Gummis begrenzt ist. Nachteilig an beiden letztgenannten Verfahren ist, dass, wie schon beim Pressure Forming, die Membranen nur mit großem Handhabungsaufwand sehr dünn ausgeführt werden können.

Die Aufgabe der vorliegenden Erfindung besteht darin, ein Verfahren zur Herstellung einer Membran in einem Rahmen anzugeben, das die oben genannten Nachteile nicht aufweist.

Insbesondere sollen sich hiermit lokal dreidimensional geformte, insbesondere einer mit einer Dicke von 0,1 µm bis 20 µm sehr dünne Membranen unter geringem Handhabungsaufwand herstellen lassen.

Gelöst wird diese Aufgabe durch die Merkmale des Patentanspruchs 1. Die übrigen Ansprüche bzw. die Unteransprüche beschreiben jeweils vorteilhafte Ausgestaltungen der Erfindung.

Zur Durchführung des erfindungsgemäßen mehrstufigen Herstellungsverfahrens wird in einem ersten Verfahrensschritt a) eine umzuformende Folie vorzugsweise mit einer Dicke zwischen 0,1 µm und 20 µm bereitgestellt.

Vorzugsweise besteht die umzuformende Folie aus einem Kunststoff oder einem Gemisch aus Kunststoffen, wobei als Kunststoff insbesondere ein Thermoplast, ein thermoplastisches Elastomer oder ein Thermoelast eingesetzt wird. Die Folie selbst kann mit Verstärkungs- oder Füllstoffen gefüllt sein.

In einer besonderen Ausgestaltung wird eine ein- oder mehrfach beschichtete Folie oder eine zwei- oder mehrlagige Folie als umzuformende Folie eingesetzt.

In einer alternativen Ausgestaltung wird als umzuformende Folie eine Metallfolie eingesetzt.

In einem zweiten Verfahrensschritt b) wird durch Pressen die Folie mit der flüssigen Schmelze eines Kunststoffs oder eines Gemischs aus Kunststoffen unter hohem Druck über eine Positiv- oder in eine Negativform zumindest lokal so umgeformt, dass die umzuformende Folie unter ihrer erhöhten Temperatur bei Besitz ihres Materialzusammenhalts stark erweicht, aber nicht bei Verlust des Materialzusammenhalts aufschmilzt und somit die Gestalt von Teilen der Positiv- oder der Negativform annimmt. Darüber hinaus kann die umzuformende Folie zusätzlich durch eine äußere Wärmequelle erwärmt werden.

Alternativ wird der flüssige Kunststoff aus einem flüssigen, vernetzenden oder vernetzbaren oder härtenden oder härtbaren Harz oder Kunststoffvorprodukt gebildet.

In einer bevorzugten Ausgestaltung wird die Schmelze aus flüssigem Kunststoff aus einer weiteren, aufzuschmelzenden Folie erschmolzen. Hierbei wird die aufzuschmelzende Folie vorzugsweise so ausgewählt, dass sie sich während des Umformens in einem schmelzflüssigen, thermoplastischen Zustand befindet, während sich die umzuformende Folie bei derselben Temperatur in einem erweichten, kautschuk-, gummi-, entropie- oder thermoelastischen Zustand befindet.

In einer besonders bevorzugten Ausgestaltung sind die umzuformende Folie und die aufzuschmelzende Folie derart angeordnet, dass sie Teil der gleichen zwei- oder mehrlagigen Folie sind. In dieser Ausgestaltung ist es vorteilhaft, wenn die umzuformende Folie und die aufzuschmelzende Folie gemeinsam für das Umformen erwärmt werden.

In einer besonderen Ausgestaltung wird die umzuformende Folie hinterformt und dabei die der umgeformten Folie abgewandte Seite der erstarrten Kunststoffschmelze eben oder strukturiert.

In einem dritten Verfahrensschritt c) wird die Schmelze aus flüssigem Kunststoff verfestigt oder sich verfestigen lassen. Je nach Art des gewählten Kunststoffs, wird hierzu der flüssige Kunststoff insbesondere durch Abkühlen unter hohem Druck zu einem festen Kunststoff erstarrt oder der flüssige Kunststoff durch Lichtaushärtung zu einem festen Kunststoff erstarrt.

In einem vierten Verfahrensschritt d) wird der zweilagige Verbund aus der umgeformten Folie und der erstarrten Schmelze entformt.

Wird nicht bereits während Verfahrensschritt a) ein mit der umzuformenden Folie verbundener Körper als Rahmen bereitgestellt, wird nun vor Verfahrensschritt e), vorzugsweise zwischen den Verfahrensschritten d) und e) ein Rahmen mit der umgeformten Folie verbunden. Der Rahmen wird vorzugsweise durch Kleben, Klemmen, Siegeln, Schweißen, Anspritzen oder thermisches Bonden mit der umgeformten Folie verbunden.

In einer bevorzugten Ausgestaltung wird der Randbereich der umgeformten Folie für die Verbindung mit dem Rahmen vor Verfahrensschritt e) nicht umgeformt.

In einer besonderen Ausgestaltung wird als Rahmen ein Körper aus mindestens zwei Teilen eingesetzt oder der Rahmen wird aus mindestens zwei Teilen vor Verfahrensschritt e) mit der umgeformten Folie verbunden.

Schließlich wird in einem letzten Verfahrensschritt e) die umgeformte Folie mitsamt dem hiermit verbundenen Rahmen vom Verbund mit der erstarrten Kunststoffschmelze abgelöst, so dass diese nun im Rahmen freigespannt aufgehängt ist. Vorzugsweise erfolgt das Ablösen der umgeformte Folie und des Rahmens vom Verbund mit der erstarrten Kunststoffschmelze durch Abziehen oder Abschälen oder durch physikalisches Lösen, nass- oder trockenchemisches oder physikalisches Ätzen der erstarrten Kunststoffschmelze.

In einer besonderen Ausgestaltung wird das Ablösen der umgeformten Folie und des Rahmens vom Verbund mit der erstarrten Kunststoffschmelze dadurch erleichtert, dass für die Kunststoffschmelze ein unpolarer Kunststoff gewählt wird oder dass zwischen die umgeformte Folie und die erstarrte Kunststoffschmelze eine weitere Folie aus einem unpolaren Kunststoff eingelegt wird.

Beim Etikettenhinterspritzen bzw. In-Mould-Labelling (IML) werden vorbedruckte Ettiketten in das Werkzeug einer Spritzgießmaschine eingelegt und mit der thermoplastischen Schmelze oder dem flüssigen, härtbaren Vorprodukt bzw. Harz eines Kunststoffs hinterspritzt. Beim In-Mould-Dekorieren bzw. In-Mould-Decoration (IMD) werden dekorative, teilweise außerhalb oder auch innerhalb des Werkzeugs einer Spritzgießmaschine durch Thermoformen bzw. Tiefziehen bereits vorgeformte, im Endlosformat durch das Spritzgusswerkzeug gezogene, dekorative Folien hinterspritzt. Das hinterspritzte bzw. hinterformte Material wird aber nicht zu einem späteren Zeitpunkt abgelöst und verworfen, es ist das eigentliche Teil bzw. dessen Unterbau. (Reines) Thermoformen durch Hinterformen von Folien würde im makroskopischen Bereich technisch und ökonomisch wenig bis keinen Sinn machen, weil die zu verwerfende Materialmenge in der Regel groß wäre. Im Mikroskopischen macht dies Sinn, weil die zu verwerfende Materialmenge klein ist. Dies gilt besonders dann, wenn das hinterformte Material als temporäres Substrat für eine bezüglich Transport und Handhabung vereinfachte weitere Prozessierung der umgeformten Folie fungiert.

Ein besonderer Vorteil der Erfindung besteht darin, dass für den Fall, dass die umzuformende Folie und die aufzuschmelzende Folie Teil der gleichen z. B. zweilagig koextrudierten Folie sind, die Handhabung nicht erst der umgeformten Folie, sondern bereits der umzuformenden Folie erheblich erleichtert wird.

Ein besonderer Vorteil der Erfindung besteht darin, dass das mindestens lokale Umformen der Folie mit einer Kunststoffschmelze unter hohem Druck, also einer nahezu inkompressiblen, hochviskosen Flüssigkeit, erheblich sicherer zu betreiben ist als mit einem stark kompressiblen Gas unter hohem Druck im Fall des High Pressure Forming. Dies gilt insbesondere für den Fall, dass die umzuformende Folie in einem Heißpräge- bzw. Vakuumheißprägeprozess hinterformt bzw. -prägt wird.

Ein weiterer Vorteil der Erfindung besteht darin, dass die gegenüber der sehr dünnen umgeformten Folie steifere und auf der von der Folie abgewandten Seite ebene erstarrte Kunststoffschmelze z.B. als eine Art Lagerungs-, Transport- und Handhabungssubstrat für die sehr dünne Folie dient.

Weiterhin besteht ein besonderer Vorteil der Erfindung darin, dass die sehr dünne umgeformte Folie im Verbund mit der erstarrten Kunststoffschmelze nach dem Entformen z.B. gerollt aufbewahrt werden kann.

Darüber hinaus ist es vorteilhaft, dass das erfindungsgemäße Verfahren nicht waferbasiert und damit kostengünstig ist.

Schließlich besteht ein besonderer Vorteil der Erfindung darin, dass die Assemblierung der umgeformten Membran bzw. Folie und des Gehäuse- oder Chipkörpers als Rahmen dadurch vereinfacht wird, dass die Folie in diesem Verfahrensschritt über den Verbund mit der erstarrten Kunststoffschmelze definiert, insbesondere faltenfrei, auf der erstarrten Schmelze liegt.

Das vorliegende Verfahren eignet sich insbesondere dann, wenn die umzuformende Folie, die Positiv- oder Negativform bzw. der Rahmen mikro- und/oder nanostrukturiert bereitgestellt werden oder die umzuformende Folie, die umgeformte Folie im Verbund mit der erstarrten Kunststoffschmelze, die Positiv- oder Negativform bzw. der Rahmen während des Verfahrens mit mikro- und/oder nanotechnologischen Verfahren behandelt werden.

Die Erfindung wird im Folgenden anhand von Ausführungsbeispielen und den Figuren näher erläutert. Hierbei zeigen:
- **Fig. 1 bis 5**: Schematische Darstellung der Verfahrensschritte des erfindungsgemäßen Verfahrens:
**Fig. 1** Verfahrensschritt a)
**Fig. 2** Verfahrensschritte b) und c)
**Fig. 3** Verfahrensschritt d)
**Fig. 4** Anbringen des Rahmens
**Fig. 5** Verfahrensschritt e)
- **Fig. 6**: Ablösen der umgeformten Folie mitsamt dem verbundenen Rahmen vom Verbund mit der erstarrten Kunststoff schmelze in einem Lösungsmittel als alternative Verfahrensweise für Schritt e)
- **Fig. 7**: Rahmen in Form eines Mehrfachgehäuses mit Miniaturkavitäten über einer umgeformten Mikrostruktur
- **Fig. 8**: Sägeschnitte mit der Wafersäge zwischen den Gehäusekavitäten zur Vereinzelung des Stapelverbunds aus Mehrfachgehäusen und umgeformter Folie

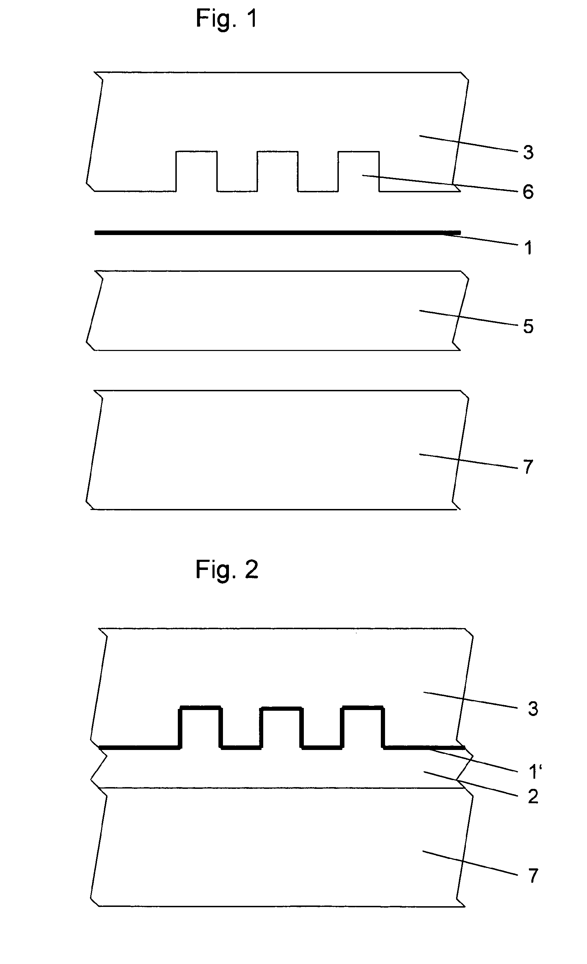

Im einem ersten Ausführungsbeispiel wird, wie in **Fig. 1** schematisch dargestellt, eine koextrudierte, zweilagige Folie in eine Heißprägeanlage zwischen ein mikrostrukturiertes Mehrfachwerkzeug in Form einer Platte, die mit mehreren, in Reihen und Spalten angeordneten, gleichen Mikrokavitäten **6** versehenen ist, und eine unstrukturierte Substratplatte **7** eingelegt. Dann wird der Zwischenraum zwischen der Werkzeugplatte **3** und der Substratplatte **7** und damit auch der Bereich der Werkzeugkavitäten **6** evakuiert.

Weiter wird die zweilagige Folie über die Werkzeugplatte **3** und die Substratplatte **7** aufgeheizt. Dabei sind die Parameter bzgl. der thermomechanischen Eigenschaften der Folienlagen und der eingeheizten Prozesstemperatur so eingestellt, dass sich bei einer bestimmten Temperatur die im Vergleich zur anderen Lage der Folie dickere und zur Substratplatte hin liegende Folienlage im für das Urformen geeigneten, schmelzeflüssigen, thermoplastischen Bereich befindet, während sich bei der gleichen Temperatur die sehr dünne und zur Werkzeugplatte hin liegende Folienlage im für das Umformen am besten geeigneten, stark erweichten, thermoelastischen Bereich befindet.

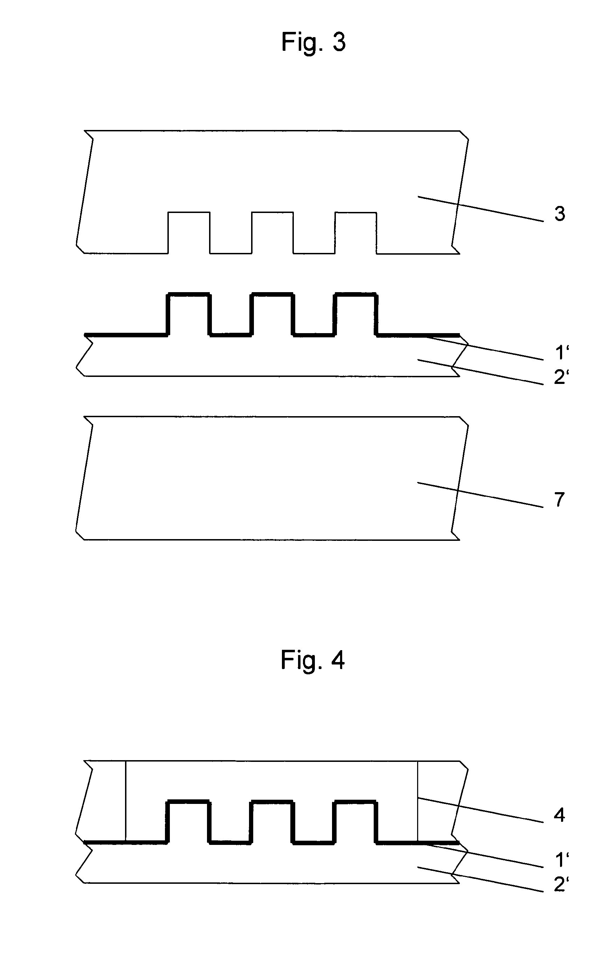

Sodann wird gemäß **Fig. 2** durch Pressen der zweilagigen Folie zwischen der Werkzeugplatte **3** und der Substratplatte **7** die sehr dünne Folienlage **1** durch die Schmelze der dickeren Folienlage **2** hinterprägt. Weiterhin wird die geprägte Folie über die Werkzeugplatte **3** und die Substratplatte **7** unter hohem Nachdruck derart abgekühlt, dass die Kunststoffschmelze **2** zu einem Festkörper **2'** erstarrt und die umgeformte Folielage **1'** nicht mehr stark erweicht ist. Dann wird, nach bzw. mit Auseinanderfahren der Werkzeug- und Substratplatte gemäß **Fig. 3** der zweilagige Verbund aus umgeformter Folie **1'** und erstarrter Kunststoffschmelze **2'** entformt.

Weiter wird die umgeformte Folie **1'** im Verbund mit der erstarrten Kunststoffschmelze **2'** mit Verfahren der Oberflächen- und Volumenmikromechanik prozessiert. Dabei muss die umzuformende Folie **1,** je nachdem, welche Seite der umgeformten Folie **1'** jetzt prozessiert werden soll und damit auch noch über das Umformen hinaus zugänglich geblieben sein soll, zuvor in eine Negativ- oder über eine Positivform **3** gepresst werden. Die gegenüber der umgeformten Folie **1'** steifere und auf der von der Folie **1'** abgewandten Seite ebene erstarrte Kunststoffschmelze **2'** dient dabei als eine Art Transport- und Handhabungssubstrat für die sehr dünne Folie **1' ,** das so z. B. auf dem rotierenden Vakuumhalter eines Sprüh-Belackers oder -Entwicklers gehaltert werden kann.

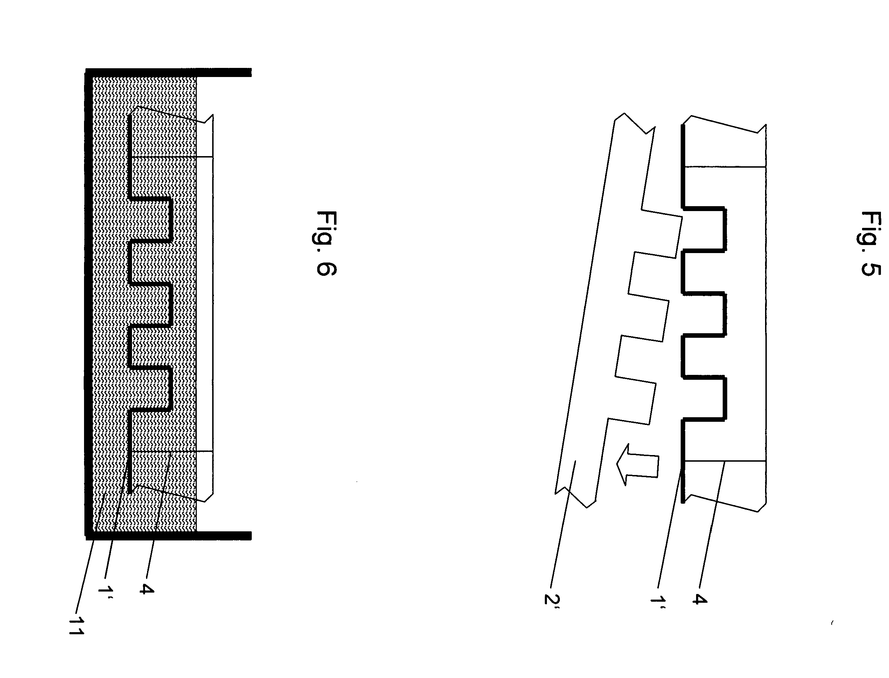

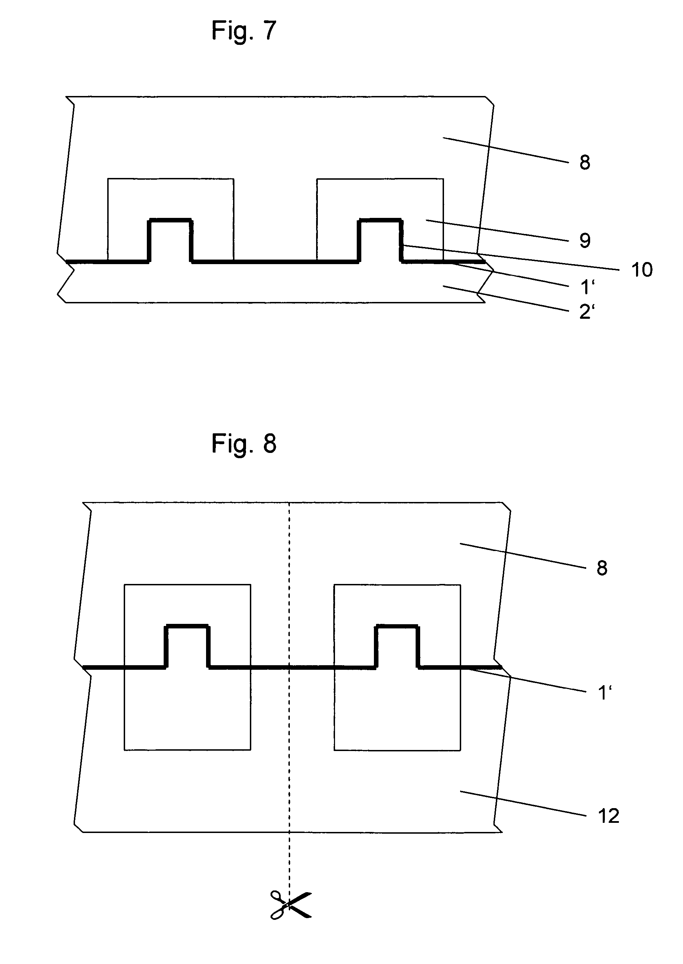

Sodann wird, wie **Fig. 4** oder **Fig. 7** zeigen, als Rahmen ein erstes Mehrfachgehäuse **8** in Form eines Plättchens, das mit mehreren, in Reihen und Spalten angeordneten, gleichen Miniaturkavitäten **9** versehenen ist, mit der umgeformten Folie **1** durch Kleben derart verbunden, dass jeweils eine Gehäusekavität **9** über einer umgeformten Mikrostruktur **10** liegt. Weiterhin wird die umgeformte Folie **1'** mitsamt dem verbundenen Mehrfachgehäuse **8** von der erstarrten Kunststoffschmelze **2'** entweder gemäß **Fig. 5** mechanisch oder gemäß **Fig. 6** in einem Lösungsmittel **11** abgelöst, so dass die umgeformte Folie **1'** nun jeweils in den Gehäusekavitäten **9** freigespannt aufgehängt ist.

Dann wird, wie in **Fig. 8** dargestellt, ein zweites Mehrfachgehäuse **12** mit der umgeformten Folie **1'** jetzt auf deren noch freier anderer Seite durch Kleben verbunden. Weiter wird durch in Reihen und Spalten geführte Sägeschnitte mit der Wafersäge zwischen den Gehäusekavitäten hindurch der Stapelverbund aus Mehrfachgehäusen **8, 12** und umgeformter Folie **1'** vereinzelt.

Im zweiten Ausführungsbeispiel wurde anstelle einer koextrudierten, zweilagigen Folie ein Stapel aus einer umzuformenden 20 µm dicken, ersten Folie aus Polycarbonat (PC) und einer 125 µm dicken, zweiten Folie aus Polymethylmethacrylat (PMMA) eingesetzt, aus der die Kunststoffschmelze erschmolzen wurde, mit der die Folie durch Pressen derselben unter hohem Formdruck in oder über eine Form mindestens lokal umgeformt wurde. Die Prozesstemperatur beim Hinterprägen betrug 150 °C, eine Temperatur, bei der PC im Bereich seiner Glasübergangstemperatur stark erweicht, wohingegen PMMA schon bei ca. 110 °C im Bereich seiner Glasübergangstemperatur stark erweicht und bei der Prozesstemperatur von 150 °C längst schmelzflüssig wird. Der Prozessdruck beim Hinterprägen betrug 50 N/mm². Das erste und zweite Gehäuse bestand aus Polysulfon (PSU). Die Gehäuse wurden mit der umgeformten Folie durch Kapillarkleben mit einem Epoxydharzkleber verbunden. Die umgeformte Folie wurde mitsamt dem verbundenen Gehäuse durch physikalisches (Auf-) Lösen der erstarrten Kunststoffschmelze in einem Wasser-Isopropanol-Gemisch hiervon abgelöst.

Im dritten Ausführungsbeispiel wurde ein Stapel aus einer umzuformenden 25 µm dicken, ersten Folie aus Polypropylen (PP) und einer 125 µm dicken, zweiten Folie aus PMMA eingesetzt. Die Prozesstemperatur betrug 165 °C, eine Temperatur, bei der PP im Bereich seiner Kristallitschmelztemperatur stark erweicht, wohingegen, wie bereits oben erwähnt, PMMA bei der Prozesstemperatur von 165 °C längst schmelzflüssig wird. Der Prozessdruck beim Hinterprägen betrug 50 N/mm². Das erste und zweite Gehäuse bestand aus PSU. Die Gehäuse wurden mit der (in einem Sauerstoffplasma aktivierten) umgeformten Folie durch Kapillarkleben mit einem Epoxydharzkleber verbunden. Die unpolare umgeformte Folie wurde mitsamt dem verbundenen Gehäuse entweder durch physikalisches (Auf-)Lösen der erstarrten Kunststoffschmelze in Ethylacetat als auch durch Abziehen bzw. -schälen der erstarrten Kunststoffschmelze hiervon abgelöst.

Im vierten Ausführungsbeispiel wurde ein Stapel aus einer umzuformenden 25 µm dicken, ersten Folie aus PP und 32 übereinandergestapelten 4 µm dicken Folien aus Polyethylen (PE) eingesetzt. Die Prozesstemperatur beim Hinterprägen betrug 165 °C, eine Temperatur, bei der PP im Bereich seiner Kristallitschmelztemperatur stark erweicht, wohingegen PE im Bereich seiner Kristallitschmelztemperatur schon bei ca. 110 °C stark erweicht und bei Prozesstemperatur von 165 °C längst schmelzeflüssig wird. Der Prozessdruck beim Hinterprägen betrug 50 N/mm². Das erste und zweite Gehäuse bestand aus PMMA. Die Gehäuse wurden mit der in einem Sauerstoffplasma aktivierten umgeformten Folie durch Kapillarkleben mit einem acrylatbasierten Kleber verbunden. Die unpolare umgeformte Folie wurde mitsamt dem verbundenen Gehäuse durch Abziehen bzw. -schälen der erstarrten unpolaren Kunststoffschmelze hiervon abgelöst.

### Bezugszeichenliste

- **1**: umzuformende Folie(nlage)
- **1'**: umgeformte Folie(nlage)
- **2**: flüssige Kunststoffschmelze
- **2'**: erstarrte Kunststoffschmelze
- **3**: Negativform (Werkzeugplatte)
- **4**: Rahmen
- **5**: weitere, aufzuschmelzende Folie
- **6**: Mikrokavitäten
- **7**: (unstrukturierte) Substratplatte
- **8**: (erstes) Mehrfachgehäuse
- **9**: Gehäusekavität
- **10**: Mikrostruktur
- **11**: Lösungsmittel mit aufgelöstem Kunststoff
- **12**: zweites Mehrfachgehäuse

## Patentansprüche

1. Verfahren zur Herstellung einer Membran in einem Rahmen mit den Verfahrensschritten
a) Bereitstellen einer umzuformenden Folie (1),
b) Mindestens teilweises Umformen der Folie (1) durch Pressen der Folie (1) mit einem flüssigen Kunststoff (2) über eine Positiv- oder in eine Negativ-Form (3), wodurch die Folie (1) zumindest teilweise die Gestalt der Form (3) annimmt,
c) Verfestigen oder Verfestigenlassen des flüssigen Kunststoffs (2), so dass sich ein fester Kunststoff (2') ausbildet,
d) Entformen des Verbunds aus umgeformter Folie (1') und festem Kunststoff (2'),
e) Ablösen der umgeformten Folie (1') mitsamt einem verbundenem Rahmen (4) vom Verbund mit dem festem Kunststoff (2') derart, dass die umgeformten Folie (1') im Rahmen(4) als Membran freigespannt aufgehängt ist,
wobei als Rahmen (4) ein mit der umzuformenden Folie (1) verbundener Körper während Verfahrensschritt a) bereitgestellt wird oder vor Verfahrensschritt e) der Rahmen (4) mit der umgeformten Folie (1') verbunden wird.

2. Verfahren nach Anspruch 1, wobei der flüssige Kunststoff (2) während Verfahrensschritt c) durch Abkühlen unter Druck zu einem festen Kunststoff (2') erstarrt.

3. Verfahren nach Anspruch 1 oder 2, wobei der flüssige Kunststoff (2) während Verfahrensschritt c) durch Lichtaushärtung zu einem festen Kunststoff (2') erstarrt.

4. Verfahren nach einem der Ansprüche 1 bis 3, wobei als umzuformende Folie (1) eine Folie aus mindestens einem Kunststoff eingesetzt wird.

5. Verfahren nach Anspruch 4, wobei als Kunststoff ein Thermoplast, ein thermoplastisches Elastomer oder ein Thermoelast eingesetzt wird.

6. Verfahren nach einem der Ansprüche 1 bis 3, wobei als umzuformende Folie (1) eine Metallfolie eingesetzt wird.

7. Verfahren nach einem der Ansprüche 1 bis 6, wobei eine ein- oder mehrfach beschichtete Folie oder eine zwei- oder mehrlagige Folie als umzuformende Folie (1) eingesetzt wird.

8. Verfahren nach einem der Ansprüche 1 bis 7, wobei der flüssige Kunststoff (2) aus einer weiteren, aufzuschmelzenden Folie (5) erschmolzen wird.

9. Verfahren nach Anspruch 8, wobei die umzuformende Folie (1) und die aufzuschmelzende Folie (5) Teil einer zwei- oder mehrlagigen Folie sind.

10. Verfahren nach einem der Ansprüche 1 bis 9, wobei die umzuformende Folie (1) hinterformt wird und dabei die der umgeformten Folie (1') abgewandte Seite des festen Kunststoffs (2') eben oder strukturiert ist.

11. Verfahren nach einem der Ansprüche 1 bis 10, wobei der Randbereich der umgeformten Folie (1') für die Verbindung mit dem Rahmen (4) nicht umgeformt wird.

12. Verfahren nach einem der Ansprüche 1 bis 11, wobei als Rahmen (4) ein Körper aus mindestens zwei Teilen eingesetzt wird oder der Rahmen (4) aus mindestens zwei Teilen vor Verfahrensschritt e) mit der umgeformten Folie (1') verbunden wird.

13. Verfahren nach einem der Ansprüche 1 bis 12, wobei zwischen die umgeformte Folie (1') und dem festen Kunststoff (2') eine weitere Folie aus unpolarem Kunststoff eingelegt wird.

14. Verfahren nach einem der Ansprüche 1 bis 13, **dadurch gekennzeichnet, dass** als umzuformende Folie (1) eine Folie mit einer Dicke zwischen 0,1 und 20 µm gewählt wird.
